Europäisches Patentamt

European Patent Office

Office européen des brevets

(11) Publication number: **0 097 036**
**A2**

## (12) EUROPEAN PATENT APPLICATION

(21) Application number: **83303356.6**

(22) Date of filing: **09.06.83**

(51) Int. Cl.³: **A 47 L 13/16**
// B32B5/26, D04H13/00,
D21H1/08

(30) Priority: **14.06.82 US 388355**
**25.04.83 US 488499**

(43) Date of publication of application: **28.12.83**
**Bulletin 83/52**

(84) Designated Contracting States: **BE DE FR GB IT NL**

(71) Applicant: **THE PROCTER & GAMBLE COMPANY,**
**301 East Sixth Street, Cincinnati Ohio 45201 (US)**

(72) Inventor: **Johnson, Robert Calvin, 630 Deerfield Drive,**
**Harrison Ohio 45030 (US)**

(74) Representative: **Gibson, Tony Nicholas et al, Procter &**
**Gamble (NTC) Limited Whitley Road, Longbenton**
**Newcastle upon Tyne NE12 9TS (GB)**

(54) Strong absorbent industrial wiper.

(57) A strong flexible absorbent laminate having remarkable properties for an industrial wiper. The unexpected result is a combination of properties including: (1) high wet abrasion strength, (2) high tear strength, (3) fast oil drop absorbency, (4) high oil absorption capacity, (5) rapid water wicking, (6) clothlike flexibility, and (7) high heat resistance. The invention is a selected combination comprising: a tear strength reinforcing nonwoven center ply with upper and lower surfaces adhesively bonded to highly absorbent, wet abrasion resistant and heat resistant outer ply tissues.

## STRONG ABSORBENT INDUSTRIAL WIPER
### Robert C. Johnson

## BACKGROUND OF THE INVENTION
### Field of the Invention

This invention relates to industrial wiper laminates and more specifically to modified tissue laminates, e.g., a laminate reinforced with a center ply web to improve its tear strength.

### Description of the Prior Art

Flexible laminates of fiber layers are well known in the art. These products generally comprise reinforcing webs and layers of various fibers. The reinforcing web can be used as a centrally disposed layer with adhering outer fiber layers or a pair of reinforcing webs can be used to sandwich a centrally disposed fiber layer. A typical laminate of the prior art is described in U.S. Pat. No. 3,388,028 issued to Robert R. Alexander on June 11, 1968. The laminate described in this patent comprises a layer of cellulose fibers plied between a pair of reinforcing webs.

A specific class of flexible laminates are known as tissue laminates. These products comprise a center reinforcing web and outer tissue layers. Tissue laminates are drapable, strong and somewhat absorbent and have gained widespread use as disposable clothing, toweling, and surgical drapes.

The laminates of the prior art have generally been prepared by impregnating a center reinforcing web having an open mesh with an adhesive and then placing tissue layers on the upper and lower surfaces of the web. The tissue layers become bonded to the reinforcing web and to one another through the openings in the web. These tissue laminates are intended to be used as inexpensive substitutes for conventionally woven cloth fabrics. It is a goal of those skilled in the art to achieve clothlike properties which are characteristic of woven fabrics such as drape, bend, strength and absorbency, while at the same time supplying a cost saving substitute.

Laminate tear strength is generally attributed to the center reinforcing web. This web can be knitted, woven or nonwoven. If a nonwoven web is used it may be formed by spunbonding, fiber entanglement or needle punching. The fibers used in reinforcing webs may be composed of a natural or synthetic substance such as cotton, rayon, polyamide, polyester, polyolefins, or blends of such substances. The particular fiber selected for reinforcement and the construction of the web are significant factors in the overall strength properties of the laminate. In addition to strength a laminate is also characterized by flexibility, drape, softness and absorbency. These properties have been generally attributed to the characteristics of the tissue layers, and the type and quantity of adhesive used for bonding the layers in the laminate. Tissue weights of 10-30 $g/m^2$ with minimal surface strength are disclosed in prior art laminates.

Tissue laminates having good tear strength and offering clothlike properties have been produced with varying degrees of success. Some laminates have been successfully substituted for conventional woven fabrics. Prior workers have modified laminate properties by varying the type and quantity of adhesive, the construction of the reinforcing web and/or the type of tissue layer. To achieve the best combination of properties, i.e., strength without a sacrifice in laminate flexibility, absorbency, drape and softness, adhesive concentration must be carefully controlled. U.S. Pat. No. 4,142,017, issued to William A. Blackburn and Roy D. Goodwin on February 27, 1979, reported that "a soft and drapable product can be attained with lesser amounts of adhesive but delamination of the individual layers will generally occur. On the other hand, a higher concentration of adhesive will prevent delamination but there will be a sacrifice in laminate aesthetics."

U.S. Pat. No. 3,639,047, issued to Robert W. Davison on December 21, 1971, recognized that the strength of lamiates and particularly tear strength can be enhanced by preventing or minimizing the adherence of the center reinforcing web to the outer layers.

In general, workers in the field have recognized that laminates, especially tissue laminates, having adequate strength and capable of resisting tear would be commercially attractive as alternative materials for conventionally woven and/or knitted fabrics. It has been reported that laminates having the property of resistance to tear can be obtained by using a reinforcing web having strong individual fibers capable of substantially unrestricted movement when the laminate is stressed.

Although the prior art reports that the fibers constituting the reinforcing web must have substantial freedom of movement; the accomplishment of such a result has proven to be elusive in the actual fabrication of flexible laminates and particularly tissue laminates. Blackburn et al. taught that many well known adhesives such as water-insoluble polymer dispersions (latexes) have caused adhesion to take place between the fibers of reinforcing webs and the outer tissue layers. This, according to Blackburn et al., has resulted in restricting fiber movement within the laminate with a resultant decrease in laminate strength properties, particularly tear strength. However, by so reducing the adherence of the inner fibers to the outer tissues and adhesive, the amount of latex used to prevent delamination of the outer tissues must be increased so much that the absorbent properties and flexibility of the laminate are substantially reduced.

The present invention relates particularly to wipers for industrial and other applications involving the absorption of water and oily materials. The many uses for such wipers include clean up in auto repair shops, lithographic plate processing, hand wiping, and many others. For such uses it is desirable to have a single material that wipes well for both oil and water residues. Further, since the wiping task includes contact with sharp and rough surfaces, wiper surface abrasion resistance is highly desirable. Finally, cloth wipers, which are most prevalent in industrial applications today, must be reused for economy and, as a result, are subject to contamination, pilferage and laundry

0097036

- 4 -

costs. It is, therefore, desirable to obtain an improved wiper at a cost consistent with single use and disposability.

Many forms of wipers are available for various applications. In general, however, prior wipers can be classified as either paper, cloth, or nonwoven. The paper wipers, while inexpensive, are suited primarily for use in wiping aqueous materials and not entirely satisfactory for use with oil. Although some prior art paper wipers are abrasion resistant, they are not resistant to tear. On the other hand, cloth wipers, while strong and suitable for wiping both oils and water, are expensive and special care must be taken in laundering to remove metal chips, oils and the like to prevent contamination and loss of water absorbency. Some nonwoven wipers made from rayon which may also include other ingredients such as pulp, for example, and other synthetic materials have been available, but, in general, fail to provide good wiping properties with both oil and water and may entail a cost that prevents disposability except in special application. Also, many nonwovens are not heat resistant and can melt when used in some wiping applications.

Examples of prior wipers within these broad classifications are contained in the following U.S. patents which are intended to be representative and not exhaustive: U.S. Pat. No. 3,477,084 to Thomas, U.S. Pat. No. 3,520,016 to Meitner, U.S. Pat. No. 3,546,056 to Thomas, U.S. Pat. No. 3,650,882 to Thomas, U.S. Pat. No. Re. 27,820 to Politzer et al., and U.S. Pat. No. 4,307,143 to Meitner.

Prior art laminated materials and wiping materials fail to provide one or more of the following important properties for an industrial wiper: (1) high wet abrasion strength, (2) high tear strength, (3) fast oil drop absorbency, (4) high oil absorption capacity, (5) rapid water wicking, (6) clothlike flexibility, and (7) high heat resistance.

### Summary of the Invention

According to the present invention there is provided an industrial wiper material comprising a laminate of:

A. Absorbent tissue outer plies wherein at least one said outer ply tissue alone has: 1) a basis weight of 30-90 $g/m^2$; 2) an oil absorption capacity greater than 175 $g/m^2$; 3) an oil drop absorbency rate of less than 15 sec.; 4) a water wicking rate of less than 80 sec.; and 5) a low load thickness of 0.4 to 0.8 mm;

B. A flexible tear reinforcing center ply; and

C. A latex binder which binds said outer plies to upper and lower surfaces of said center ply; wherein said wiper material has: 1) a bending length of less than 4.8 cm; 2) an oil absorption capacity of greater than 300 $g/m^2$; 3) an oil drop absorbency rate of less than 40 sec.; 4) a water wicking rate of less than 40 sec.; 5) an Elmendorf tear strength of greater than 225 g., said wiper having a tear strength equal to 30% to 70% of the tear strength of said reinforcing center ply; 6) a wet abrasion weight loss of less than 6 mg.; 7) a wiper thickness of from 0.5 mm to 1.4 mm; 8) a tubular crush of less than 850 g.; and 9) a heat resistancy of greater than $200^\circ$C.

## BRIEF DESCRIPTION OF THE DRAWINGS

Fig. 1 is an isometric planar view of a preferred embodiment of the strong tissue laminate of the present invention with facing tissue layer corners turned back to illustrate the center nonwoven layer and its relationship to the facing tissue layers.

Fig. 2 is an enlarged cross-sectional view of the strong tissue laminate illustrated in Fig. 1, which cross-sectional view illustrates placement of latex binder solids in liquid emulsions in the center layer and the minimal penetration of these latex binder solids into the absorbent facing tissue layers following wet combining at low combining pressures prior to drying and curing the strong tissue laminate. The cross-section of Fig. 2 is taken along the line 2-2 in Fig. 1.

Fig. 3 is a schematic view illustrating an exemplary method of preparing materials of the present invention.

## DETAILED DESCRIPTION OF THE INVENTION

The present invention is a disposable wiper comprising a strong flexible absorbent laminate made of:

A. Abrasion resistant, absorbent tissue outer plies;

B. A flexible tear strength reinforcing center ply; and

C. A latex binder which binds said outer plies to upper and lower surfaces of said center ply.

The wiper has:

1. A bending length of less than 4.8 cm;

2. An oil absorption capacity of greater than 300 $g/m^2$;

3. An oil drop absorbency of less than 15 sec.;

4. A water wicking rate of less than 40 sec.;

5. An Elmendorf tear strength of greater than 225 g., said wiper having a tear strength of 30% to 70% of the tear strength of said reinforcing center ply;

6. A wet abrasion weight loss of less than 6 mg.;

7. A wiper thickness of from 0.5 mm to 1.4 mm;

8. A tubular crush of less than 850 g.; and

9. A heat resistance of greater than 200°C.

A latex penetration of less than 30% into the outer plys is desirable. Penetration can be estimated by visually examining cross-sections of laminate made using colored latexes.

The wiper of this invention is made with:

A. An outer ply tissue which has:

1. A basis weight of 30-90 $g/m^2$ for good absorbency;

2. An oil absorption capacity greater than 175 $g/m^2$;

3. An oil drop absorbency of less than 15 sec.;

4. A water wicking rate of less than 80 sec.; and

5. A low load thickness of 0.4 to 0.8 mm for good wiper bulk;

B. A center ply which has:

1. A tear strength of greater than 325 g. for good wiper tear strength;

2. A basis weight of from 10-30 $g/m^2$; and

3. A bending length of less than 5 cm for good wiper flexibility; and

C. A laminating latex binder alone which has a glass transition temperature (Tg) of less than 10°C for wiper flexibility, with latex solids add-on of 40-150% by weight of said center ply, providing a dry laminate peel of greater than 100 g. and a wet peel of greater than 80 g. These peel strengths are desirable to prevent delamination.

The industrial wiper of this invention preferably has:

1. Bending length less than 4.8 cm;
2. Oil absorption capacity greater than 500 $g/m^2$;
3. Oil drop absorbency rate less than 10 sec.;
4. Wicking rate less than 20 sec.;
5. Tear strength greater than 300 g.;
6. Wet abrasion weight loss of less than 5 mg.;
7. Wipe thickness from 0.7 mm to 1.0 mm;
8. Tubular crush less than 400 g.;
9. Heat resistancy greater than 250°C; and
10. Latex penetration less than 25%; and is made of:

A. An outer ply which has:

1. A basis weight of 30-75 $g/m^2$;
2. An oil absorption capacity greater than 175 $g/m^2$;
3. An oil drop absorbency of less than 8 sec.;
4. A water wicking rate of less than 30 sec.;
5. A wet abrasion weight loss of less than 5.2 mg; and
6. A low load thickness of 0.45 to 0.7 mm;

B. A center ply which has:

1. A tear strength of greater than 472 g.;
2. A basis weight of from 12-25 $g/m^2$;
3. A bending length of less than 4.5 cm;

C. A latex binder which has:

1. A Tg of less than 0°C;
2. An add-on of 50-130%;
3. A dry peel of greater than 150 g.; and
4. A wet peel of greater than 100 g.

## Outer Ply Tissue

Outer ply tissue can inherently have the above-identified properties or the outer ply tissue can be strengthened after lamination as described below. A preferred outer ply tissue inherently has a

1. Basis weight of 65 g/m$^2$;
2. Absorption capacity of 346 g/m$^2$;
3. Oil drop absorbency of 10 sec.;
4. A water wicking rate of 16 sec.;
5. A wet abrasion weight loss (strength) of 3.6 mg; and
6. A low load thickness of 0.53 mm.

Such a tissue is commercially available from Scott Paper Company, Philadelphia, Pennsylvania, and is sold under the trade name of HiLoft$^R$.

Other suitable outer ply tissues can be made in accordance with the disclosure of U.S. Pat. 4,158,594 issued to H.F. Becker, A.L. McConnell and R.W. Schutte, on June 19, 1979, for "Bonded Differentially Creped Fibrous Webs and Method and Apparatus for Making Same."

Another outer tissue can be made using the method disclosed on Pages 9 and 10 of commonly assigned European Patent Application Ser. No. 0,033,988, June 19, 1981.

Alternatively, a more standard tissue as those disclosed and claimed in U.S. Pat. No. 3,301,746, issued to Lawrence H. Sanford and James B. Sisson on January 31, 1967, can be successfully used in this invention if it has the basis weight, absorbency, and thickness specifications as set forth in this disclosure, if it is first laminated to an appropriate center ply, and if it is then strengthened by surface printing with an appropriate pattern of an appropriate binder to obtain a finish laminate having the abrasion resistance, absorbency, and other properties as set forth above. The choice of a pattern and binder will be obvious to those skilled in the art of strong, surface bound tissue making as set forth in the aforementioned tissue patents.

One preferred bonding pattern is disclosed in U.S. Pat. No. 4,158,594, issued to H.E. Becker, A.L. McConnell and R.W. Schutte, on June 24, 1979, at column 12, lines 24 to 37. A preferred binder is disclosed in the same patent at column 20, lines 35 to 46.

### The Center Ply Material

The center ply can be any appropriate reinforcing nonwoven web, e.g., spunbonded, fiberentangled, needle punched, adhesive bonded after carding, etc., as disclosed above. Spunbonded nonwoven material is preferred. An example of a preferred center ply material is Reemay[R] sold by DuPont, Wilmington, Delaware.

Reemay[R] is a polyester fibrous material, one such ply has:

1.    A tear strength of 574 g.;
2.    A basis weight of 17 $g/m^2$; and
3.    A bending length of 3.8 cm.

### The Laminating Binder Material

The laminate binder material of this invention has the above-identified Tg's. The preferred laminating binder materials are acrylic (acrylate) latex binders or vinyl acetate/ethylene copolymer latex binders having the aforementioned attributes. Examples of suitable latex binders include Airflex A402[R] sold by Air Products & Chemicals, Inc., Allentown, Pennsylvania and Emulsion E751 sold by Rohm and Haas, Philadelphia, Pennsylvania.

### Evaluation of Properties

The physical properties of the laminates and/or starting materials used in the present invention were determined by the procedures set out below. One inch (1") is equal to 2.54 cm.

### Bending Test

Scope:

A stiffness measurement is obtained by extending a strip of fabric beyond a stationary table edge onto a bend angle indicator. The test can evaluate any semi-rigid material such as plastic film, foil, paper products, textiles and nonwovens.

Apparatus:

TMI Cantilever Bend Tester Model 79-10.

Sample:

Cut 5 strips 25.4mm x 150mm (150mm in the warp);

Cut 5 strips 25.4mm x 150mm (150mm in the filling);

Condition a minimum of four hours at 50% RH,

73°F (25°C).

Procedure:

1. Remove the movable slide from the stationary table.

2. Place the sample to be tested on the stationary table so that its long dimension is parallel to the edge of the table and the leading edge is in line with the scribed line located ¼" from the right-hand edge of the table.

3. Place the movable slide over the gear rack pins, not touching the sample and manually move the movable slide and gear rack to the left until the left end of the slide hits the stop on the back plate.

4. Lower the slide onto the sample being careful not to move it.

5. Using the two knurled screws provided, adjust the bend angle indicator to 41.5° and lock.

6. Turn the on-off switch to ON.

7. When the leading edge of the sample touches the knife edge of the bend angle indicator, turn the on-off switch to OFF.

8. Reading the overhang length from the scale on the upper slide, record in mm.

9. There will be 4 readings per strip; take one from each end, then turn the strip over and read once again from each end.

Report:

The average bending length (BL).

$$BL = \frac{\text{overhang length}}{2}$$

## Vertical Oil Absorption Capacity Test

### Principle

A measurement of the oil absorptive capacity of an absorbent material is obtained by determining the amount of oil retained in a 254mm x 254mm sample of material which has been soaked in mineral oil and then allowed to drain for 20 minutes.

### Apparatus

1. Balance with 0.01 gms accuracy
2. Cutting board
3. 230mm x 230mm pan
4. 1000 ml beaker
5. 2 ring stands and appropriate clamps to suspend sample
6. Timer
7. Mineral Oil - Fisher Sci. Catalog #0-119 - white, light saybolt viscosity 125/135.

### Sampling

A minimum of 6 samples should be tested. Samples should be free of creases or folds and cut exactly 254mm x 254mm.

### Procedure

All testing should be done at room temperature, 25°C, (70-72°F). First record the dry weight of each sample to the nearest 0.01 gm. The sample is then submerged in a pan of mineral oil for 1 minute. The sample is then hung by its corners using binder clips attached to a cross arm which is supported by the ring stands. The sample should be positioned so that the top edge is held straight and level. A minimum of 3 samples are tested with the machine direction perpendicular to the lab bench during draining (position A) and 3 samples with the cross direction perpendicular to the lab bench during draining (position B). While the sample is draining, weigh a 1000 ml beaker to the nearest 0.01 gm. After allowing the sample to drain for 20 min. carefully remove it from the ring stands, place it in the preweighed beaker and weigh the beaker plus the wet sample to the nearest 0.01 gm. The wet weight of the sample can be determined by subtracting the weight of the beaker from the weight of the beaker plus the wet sample. To obtain the grams of oil retained by the sample, subtract the dry weight of the sample from the wet weight.

Report

1.  Grams of oil absorbed by 100 sq. in. (645 sq.cm) sample. Report to nearest 0.01 gm the average of all six samples.

2.  Grams of oil absorbed/m$^2$ using the following equation:

$$\text{gms oil/m}^2 = \frac{\text{gms oil}}{100 \text{ sq.in.}} \times \frac{1 \text{ sq. in.}}{0.000645 \text{ m}^2}$$

### Oil Drop Absorbency Test

Principle

An oil absorbency rate measurement is obtained by dispensing an oil droplet on the surface of the test material and measuring the time required for the drop to be completely absorbed by the material.

Apparatus

1.  Stop watch.
2.  Cutting board.
3.  Jar or other similar item with an opening of approx. 10 cm.
4.  Rubber band #64.
5.  Syringes capable of dispensing 0.1 ml and 0.05 ml. Hamilton Co. dispenser (Catalog No. PB 600-10) and syringe (Catalog No. 81501, 1005LT) are recommended.
6.  Mineral Oil - Fisher Sci. (Catalog No. 0-119), white, light, saybolt viscosity 125/135.

Sample

Cut samples approx. 150 mm x 150 mm. Test a minimum of 5 samples for each material.

Procedure

Conduct test at room temperature 70-73°F (~25°C). Stretch the sample across the opening of the jar and hold it in place with a rubber band. Smooth out any creases in the material. If testing laminates, dispense 0.1 ml of mineral oil onto the laminate materials and simultaneously start the stop watch. Dispense 0.05 ml of mineral oil if testing single tissues. The drop is considered absorbed when it no longer reflects light when viewed from an angle of about 45°. Stop the timer the instant the drop is absorbed and record the time to the nearest second. Take a minimum of 3 readings on each side of the material.

Report

Record the average of all the readings taken to the nearest second.

## Water Wicking Rate Test

Principle

Determine the time in seconds required for a sample, whether laminate or tissue, to absorb 0.10 ml of distilled water using a timer.

Apparatus

1. Reid Tester

2. Timer

Apparatus Description

The "Reid Tester" consists of a glass reservoir approximately 500-600 ml in volume. A 3-way valve is connected to the reservoir by flexible plastic (Tycon) tubing. The distilled water in the instrument reservoir is allowed to flow from both the orifice or the open tip of the 0.10 ml pipette, depending on the position of the 3-way valve. The leveling feet are connected to the base so that the Plexiglas plate of the tester and pipette are exactly level.

Sample

Cut 76mm wide sample strips across the roll ( 510 mm roll). Run six tests per sample strip, two strips per sample.

Apparatus Preparation

1. New or very infrequently used testers should be washed out with 0.5N hydrochloric acid. Allow this acid to remain in the tester for several hours, drain and refill with fresh acid for an additional 1-3 hours. Flush tester thoroughly with distilled water at least five times until pH is the same as the distilled water and no chloride ion remains.

2. Pressure flush this apparatus with distilled water each day before operation.

3. Carefully adjust the leveling feet so that the Plexiglas plate of the tester is exactly level.

Procedure

1. Make sure no air is entrained anywhere in the tubing/pipette assembly, and that the pipette tip is filled and any drops absorbed from the Plexiglas plate.

2. Turn 3-way stopcock to fill the calibrated pipette. Absorb the drops from the open end and shut off stopcock so that the pipette is exactly at 0.10 ml.

3. Place one end of the sample strip over the lower plate and cover with top plate.

4. Turn the stopcock so the red dot is straight up.

5. Immediately start the timer if the water begins to wick from the calibrated pipette; if not, tap the top of the Plexiglas plate until the wicking begins and immediately start the timer.

6. As soon as the water crosses the zero (0) line, stop the timer and shut the stopcock. Record to one-tenth second.

7. Move the sample approximately three inches further down the strip and turn it over. Repeat from Step 2. Report as average number seconds.

### Peel Ply Strength Test

Principle

A measurement of ply to ply bonding strength is obtained by measuring the amount of force required to separate the plies of a laminated material using a tensile tester.

Apparatus

1. Tensile tester equipped with a tensile load cell (zero to 2000 gm range). Thwing Albert Tensile Tester Model QCII is recommended, however, an Instron can also be used.

2.    Paper Cutter - TMI 25.4mm    strip cutter or equivalent is recommended.

3.    Solvents.

Sample

Cut test strips 25.4mm x 254mm. Test a minimum of 5 samples in each direction.

Procedure

Jaws on the tensile tester are set 100mm apart. Jaw separation speed is 100mm/min. The readout is in gms. and is set to record the maximum amount of resistance which occurs during the test. The travel distance of the jaw is manually controlled between 25 and 37 mm during the test. The plies of the test strip are manually separated for approx. 50-75 mm . The end of one ply is placed in the upper jaw and the end of the other ply is placed in the lower jaw, being careful to keep the edge of the strip in alignment with the vertical edges of the jaws. After allowing the tester to peel the plies for a distance of 25-37 mm , the maximum force exerted on the plies is recorded, the jaws are returned to the starting position, and the sample is discarded.

Water Resistance

Same procedure as above except for wet peel ply strength, the strips are soaked in 49$^\circ$C water for 2 minutes before testing. Samples should be tested within 30 sec. after removing them from the water.

Report

1.    Maximum grams of force required to separate plies. Report to nearest gram the average of 5 readings in each direction.

2.    Whether tested dry or wet.

### Basis Weight Test

Scope

A weight measurement is obtained by using an analytical balance and a specifically sized sample (either structure or individual layer).

Apparatus

Analytical balance

Sample

Cut 5 specimens, 254 mm x 254 mm.

Condition a minimum of four hours at 50% relative humidity (RH), 73°F.

Procedure

Weight each sample. Record.

Multiply each weight by 15.5 to give $g/m^2$.

Average those weights for an overall measure.

Report

The average basis weight in $g/m^2$ for each structure or nonwoven. 1 lb/3000 sq. ft. = 1.63 $g/m^2$.

Note: During manufacture percent (%) add-on level of latex is calculated by adding the known basis weights of raw materials and subtracting that number from the actual basis weight of the finished product. This remainder divided by the weight of finished product gives percent add-on.

Example: Raw Materials

| | |
|---|---|
| Outer ply | 77.5 $g/m^2$ |
| Core | 26.0 $g/m^2$ |
| Outer ply | 77.5 $g/m$ |
| | 181.0 $g/m^2$ |

Finished product weight = 211 $g/m^2$

Raw material weight = -181 $g/m^2$

30 $g/m^2$

$\dfrac{30}{211}$ = 14% add-on.

### Tear Strength Test

The tear strength test is measured using the Standard Test Method for Tear Resistance of Woven Fabrics by Falling-Pendulum (Elmendorf) Apparatus (ANSI/ASTM D 1424-63 (Reapproved 1975)).

In this method the average force required to continue a tongue-type tear in a fabric is determined by measuring the work done in tearing the fabric through a fixed distance. An average of ten determinations is made and the tearing force is reported in grams. It is well known in the art that tissue laminate tear strength is commonly referred to as the "Elmendorf Tear Strength." For purposes of this description the terms "tear strength" and "Elmendorf Tear Strength" are synonymous.

### Wet Abrasion Resistance Test

Samples of fabric to be tested are cut into 150 mm x 150 mm squares with a 12.7 mm diameter hole cut in the center. Each sample is placed in a weighing bottle and dried in an oven at 110°C for 2 hours. The temperature and drying time may be adjusted for different types of fabrics. After removing the samples from the oven, they are placed in a dessicator and are allowed to cool to room temperature (approximately 1 hour).

The samples are then weighed to the nearest 0.0001 gram. Each sample is then placed on a Taber abraser – Research Model and the weight is set to a 125 gram load per wheel. CS-8 wheels are used. Two cubic centimeters of water are put on the sample and the wheels via pipette. The abraser is run the number of cycles desired, normally two hundred. The wheels are then lifted and the sample is brushed, making sure that all nonattached particles are removed. The particles which are loosely attached to the fabric remain. The wheels and table are dried and brushed to remove any clinging particles. Each sample is again placed in a weighing bottle and completely dired in an oven (the time and temperature being adjusted according to the fabric being tested). After each sample is removed from the oven and cooled to room temperature, it is again weighed and recorded, and the weight loss in milligrams is computed and reported. A low number is desired.

### Low Load Thickness Test

The low load thicknesses were obtained using the Standard Method for Measuring Thickness of Textile Materials (ANSI/ASTM D 1999-64 (Reapproved 1975)).

### Temperature Resistance Test

Scope

The ability of a wiper to withstand high temperature without flowing or flaming is obtained by placing wipers in intimate contact with a hot surface for a specified period of time.

Apparatus

75mm x 75mm metal block (32 oz.)

200mm x 200mm sheet metal

Hot plate

Wahl Digital Heat Prober Thermometer

Sample

Cut wipers 75 mm x 75 mm

Procedure

1. Using a hot plate, a square of sheet metal is heated from 350°F (180°C) to 600°F (320°C) in 50°F (30°C) increments.

2. At each level, the 75mmx75mm wiper is placed on the metal and covered with the weight block giving an approximate 3.45 kPa pressure.

3. After 30 seconds, remove the weight and wiper and check for visual damage.

4. Use the heat prober between each wiper to make sure the temperature is constant at each level.

Report

The "failure point" of each wiper. Failure point in this test being the temperature causing melting or flowing of a layer or latex, or smoking of the structure indicating a near flame point.

Tubular Crush Test

Scope

A measurement of flexibility is obtained by compressing a round tube of material against a flat surface. The test is intended for use on nonwovens, woven fabrics, and films.

Principle

A sample is wound, two complete turns, around a 25.4mm diameter rod with one inch of the sample extending beyond one end of the rod and taped in place. This extending tube of fabric is pressed against a flat surface until it crumples. The maximum force in grams to crumple the tube is reported as the "Tubular Crush."

Apparatus

1. Paper cutting board.

2. Instron Tensile Tester equipped with a compression load cell (0-2000 gm range).

3. A sample holding rod having a 25.4mm diameter with a flat end for insertion into the Tester (2) jaws.

4. Paper masking tape 19mm wide.

Sample

Cut five specimens in cross machine and five with machine direction 5.0mm x 178mm. Condition a minimum of two hours at 50% RH and 73°F. (23°C).

Procedure

Tape the beginning of the sample to the sample holding rod. Wrap the 178mm length around the rod with a 25mm overhang from the end of the rod. Secure the sample to holder with 19mm wide masking tape. Wrap the tape completely around the edge of the sample with ½ of the tape width contacting the rod and the other half contacting ½ the sample. Wind another piece of tape around the sample, line the tape edge with the shoulder represented by the top of the sample. About 6.3mm of the sample on the rod will not be taped. The one inch of the sample that extends beyond the rod end must not be taped or secured by any method. Insert the holder with the sample in the Instron jaws and measure the force required to crush the sample. Test three specimens in each direction (cross machine and machine).

Report

The average force in grams to crush the sample for machine and cross-machine direction.

## EXAMPLES

In order that the present invention may be readily understood the following examples are given by way of illustration but are not intended to be in any way a limit on the practice of the invention.

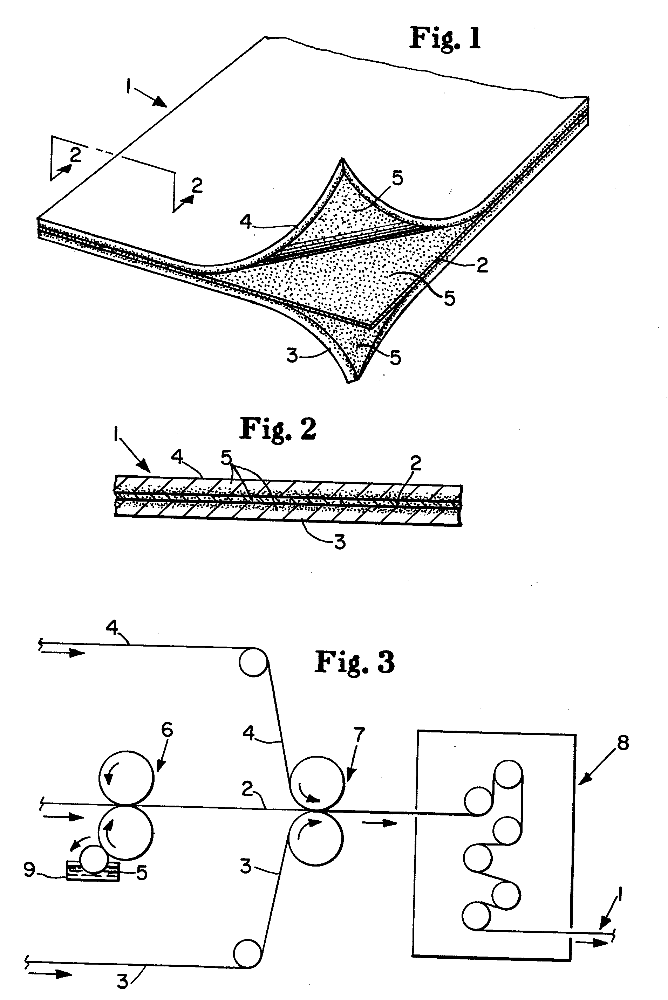

The three ply wiper illustrated in Figs. 1 and 2 is referred to in the examples. The process used to make the wipers in the following examples is illustrated in Fig. 3.

## EXAMPLE I

A three ply laminate industrial wiper was made with a center ply 2 of spun-bonded nonwoven polyester fibrous material having a basis weight of 17 $g/m^2$, a tear strength of 574 g and a bending length of 3.8 cm. This material was purchased from DuPont, Wilmington, Delaware, and is sold under the tradename of Reemay 2250[R].

The outer tissue layers 3 and 4 were strong cellulosic tissues which had a basis weight of 65 $g/m^2$, an oil capacity of 346 $g/m^2$, and oil drop absorbency rate of 10 seconds, a water wicking rate of 16 seconds, a wet abrasion (strength) weight loss of 3.6 grams, and a low load thickness of 0.53 mm. The material used was HiLoft 3037[R] (also referred to as HL 3037) purchased from Scott Paper Company, Landisville, New Jersey. The latex binder 5 used was an acrylic latex having a glass transition temperature of -30°C. The latex binder used was Airflex A402 purchased from Air Products and Chemicals, Inc., Allentown, Pennsylvania.

These materials were assembled using equipment illustrated in Fig. 3 by impregnating the center layer 2 with about 80% of its weight with the latex binder solids 5 (A402) by passing said center layer 2 through a pressurized, flooded padder roll set 6 at 661 Kg/m. The binder 5 is supplied to the padder roll set 6 as a liquid latex binder emulsion bath 9 of 30% binder solids at a Brookfield LVT viscosity of 2000 cps as measured using a #3 spindle at a spindle rotation speed of 6 rpm and contained in a trough 8.

The so impregnated center layer 2 is combined, while wet with the water emulsion of latex binder solids 5, with both the upper 4 and lower 3 tissue layers under a pressure of 179 Kg/m by passing it through a pressurized combiner roll nip 7. This insures a minimal penetration (less than 30%) of the latex into the outer ply tissues which maintains the laminate's absorbency. The combined strong, absorbent laminate is then dried and cured by passing said combined laminate over steam dryer cans 8 with the final web 1 obtaining a maximum temperature of 150°C. The dried, combined laminate is then flexibilized by: (1) passing it first through a microcreping* device (not shown) -- a Micrex (Sixty Inch) machine which adds nine crepes per inch purchased from Bird Machining Company, South Walpole, Massachusetts; followed by (2) passing it through an additional microcreping device -- Clupac machine (Sixty Inch)** at 6% crepe, and 115°C drum temperature purchased from Morrison Machine Co., Patterson, New Jersey. Tensions between sections are adjusted to keep the laminate taut without removing the crepe which was added to the laminate. The so made wiper laminate exhibits the following properties:

| | |
|---|---|
| Latex Penetration (%) | 20 |
| Bending Length (cm) | 4.1 |
| Oil Capacity (g/m$^2$) | 724 |
| Oil Absorbency Rate (sec.) | 4 |
| Water Wicking Rate (sec.) | 15 |
| Tear Strength (g) | 339 |
| Heat Resistance (°C) | 285+ |
| Wiper Thickness (mm) | .89 |
| Wet Abrasion Weight Loss (mg) | 4.52 |
| Tubular Crush (g) | 733 |

This laminate also had a peel strength of 160 g. dry and 110 g. wet.

## EXAMPLE II

Another industrial wiper of this invention was made in a like manner to Example I, except that more latex binder solids 5 were used. The center layer 2 was impregnated with about 120% of its fibrous weight of binder solids 5 (Airflex A402) by reducing the

---

\* Microcreping is taught in U.S. Pat. No. 3,753,844 to R. A. Braun, August 21, 1973, Col. 3, lines 20-50.

\*\* Clupacing is taught in U.S. Pat. No. 4,113,911 to L. L. LaFitte and J. B. Camden, September 12, 1978, Col. 9, lines 1-30.

padder pressure to 9 Kg/m with a liquid latex binder emulsion of 30% binder solids at a Brookfield LVT viscosity of 1400 cps as measured using a #3 spindle at a rotational speed of 6 rpm. Example II was combined at a pressure of 179 Kg/m.

This wiper exhibits the following properties:

| | |
|---|---|
| Latex Penetration (%) | 25 |
| Bending Length (cm) | 4.3 |
| Oil Capacity (g/m$^2$) | 669 |
| Oil Absorbency Rate (sec.) | 8 |
| Water Wicking Rate (sec.) | 5 |
| Tear Strength (g) | 342 |
| Heat Resistance (°C) | 285+ |
| Wiper Thickness (mm) | .84 |
| Wet Abrasion Weight Loss (mg) | 4.52 |
| Tubular Crush (g) | 833 |

Compared to the wiper of Example I, it will be noted that this wiper has a higher tubular crush and a longer bending length which connotes a stiffer wiper. This wiper exhibited high peel strengths of 216 g. dry and 135 g. wet.

EXAMPLE III

This industrial wiper was made in a like manner to Example I except that a different latex binder was used at a lower binder solids add-on level. The latex binder material used was Airflex A120 purchased from Air Products and Chemicals, Inc., Allentown, Pennsylvania, which has a glass transition temperature of -16°C providing a laminate wiper peel strength of 251 g. dry and 94 g. wet.

The center layer of Example III was impregnated with about 50% of its fibrous weight of binder solids 5 of Airflex A120 by passing said center layer through a pressurized, flooded padder roll set 6 at 188 Kg/m. The binder 5 is supplied to the padder roll set 6 as a liquid latex binder emulsion of 49% binder solids at a Brookfield LVT viscosity of 5800 cps as measured using a #3 spindle at a rotation speed of 6 rpm.

Example III was assembled at a combiner roll nip 7 pressure of 179 Kg/m. The so made wiper laminate exhibits the following properties:

| | |
|---|---|
| Latex Penetration (%) | 10 |
| Bending Length (cm) | 4.2 |
| Oil Capacity (g/m$^2$) | 630 |
| Oil Absorbency Rate (sec.) | 5 |
| Water Wicking Rate (sec.) | 20 |
| Tear Strength (g) | 259 |
| Heat Resistance (°C) | 285+ |
| Wiper Thickness (mm) | .85 |
| Wet Abrasion Weight Loss (mg) | 4.52 |
| Tubular Crush (g) | 610 |

As noted by Tubular Crush results, this wiper is more flexible than Example I. Note also that its wet peel strength of 94 is lower than that of the Example I wiper.

### EXAMPLE IV

This wiper material was made in a like manner to Example I except a different latex binder was used. The latex binder material used was Airflex A106 purchased from Air Products and Chemicals, Inc., Allentown, Pennsylvania, which has a glass transition temperature of 0°C providing a wiper a peel strength of 258 g. dry and 154 g. wet.

The center layer of this example was impregnated with about 80% of its fibrous weight of binder solids 5 of Airflex A106 by passing said center layer through a pressurized, flooded padder roll set 6 at 357 Kg/m. The binder 5 is supplied to the padder roll set 6 as a liquid latex binder emulsion of 40% binder solids at a Brookfield LVT viscosity of 1500 cps as measured using a #3 spindle at a rotational speed of 6 rpm.

Example IV was assembled at a combiner roll nip 7 pressure of 209 Kg/m. The so made wiper laminate exhibits the following properties:

| | |
|---|---|
| Latex Penetration (%) | 20 |
| Bending Length (cm | 3.7 |
| Oil Capacity (g/m$^2$) | 506 |
| Oil Absorbency Rate (sec.) | 7 |
| Water Wicking Rate (sec.) | 20 |
| Tear Strength (g) | 298 |
| Heat Resistance (°C) | 285+ |
| Wiper Thickness (mm) | .77 |
| Wet Abrasion Weight Loss (mg) | 4.52 |
| Tubular Crush (g) | 793 |

This wiper has better peel strength than Example I, but is stiffer as indicated by its higher Tubular Crush.

### EXAMPLE V

Example V was made in a like manner to Example I except a different center layer and latex binder solids level were used.

The laminate of Example V employs as a center layer 2 a spunbonded nonwoven comprised of continuous polypropylene fibers having a basis weight of 18 g/m$^2$ which has a tear strength of 280 grams and a bending length of 3.2 cm. The material used was Celestra C43W purchased from Crown Zellerback, Washougal, Washington.

The center layer of Example V was impregnated with about 120% of its fibrous weight of binder solids 5 of Airflex A402 by passing said center layer through a pressurized, flooded padder roll set 6 at 885 Kg/m. The binder 5 is supplied to the padder roll set 6 as a liquid latex binder emulsion of 52% binder solids at a Brookfield LVT viscosity of 12,000 cps as measured using a #3 spindle at a rotational speed of 6 rpm.

Example V was assembled at a combiner roll nip 7 pressure of 209 Kg/m. The so made wiper laminate exhibits the following properties:

| | |
|---|---|
| Latex Penetration (%) | 20 |
| Bending Length (cm) | 3.5 |
| Oil Capacity (g/m$^2$) | 534 |
| Oil Absorbency Rate (sec.) | 10 |
| Water Wicking Rate (sec.) | 19 |
| Tear Strength (g) | 226 |
| Heat Resistance (°C) | 285+ |
| Wiper Thickness (mm) | .86 |
| Wet Abrasion Weight Loss (mg) | 4.52 |
| Tubular Crush (g) | 487 |

Compared to Example I, this wiper is more flexible due to its center ply, but its tear strength is lower.

## EXAMPLE VI

Example VI was made in a like manner to Example I except different outer layers were used.

The outer tissue layers of Example VI were strong cellulosic tissues which had a basis weight of 33 g/m$^2$, an oil capacity of 198 g/m$^2$, and oil drop absorbency rate of 5.0 seconds, a wet abrasion weight loss of 5.0 mg, and a low load thickness of .50 mm. The tissue used was made in accordance with the method disclosed on Pages 9-13 and Fig. 5 of commonly assigned European Pat. Application Ser. No. 0,033,988, published June 19, 1981, incorporated herein by reference. The tissue was produced on a twin-wire tissue machine with the same pulp make-up and additives as in Example I of EPA '988. A 24-MD/20-CD filament per inch polyester fabric was used. A latex binder was applied with a gravure cylinder using 20% solids Rohm and Haas TR-520 acrylic latex to achieve a level of 8.0% by weight of binder solids on the tissue.

The materials are laminated in a like manner to Example I. The dried, combined laminate is then flexibilized by passing through a Micrex microcreping device which adds 10 to 16 crepes per inch and obtains 10% total crepe.

The so made wiper laminate exhibits the following properties:

Latex Penetration (%)     25

Bending Length (cm)     4.6

Oil Capacity (g/m$^2$)     375

Oil Absorbency Rate (sec.)     7

Water Wicking Rate (sec.)     35

Tear Strength (g)     317

Heat Resistance (°C)     285+

Wiper Thickness (mm)     .77

Wet Abrasion Weight Loss (mg)     5.0

Tubular Crush (g)     380

This laminate also had a peel strength of 236 g dry and 98 g wet.

The properties of three commercially available wipers are shown in Table 1.

## TABLE 1

| Properties | Dura-Weve | Wypall | Kimtex |
|---|---|---|---|
| Bending Length (cm) | 4.5 | 4.0 | 4.1 |
| Oil Capacity (g/m$^2$) | 240 | 520 | 546 |
| Oil Absorbency Rate (sec.) | 17 | 4 | 24 |
| Water Wicking Rate (sec.) | 26 | 16 | 14 |
| Tear Strength (g) | 202 | 127 | 157 |
| Heat Resistance (°C) | 260 | 285 | 175 |
| Wiper Thickness (mm) | .64 | .69 | .64 |
| Wet Abrasion Weight Loss (mg) | 84 | 3.56 | 1.69 |
| Tubular Crush (g) | 230 | 210 | 186 |

It will be noted that the DuraWeve[R] wiper (a three ply laminate sold by Scott Paper Co.) had poor oil capacity (240 g/m$^2$). Its wet abrasion strength was also very poor (84). Kimtex[R] (a melt blown nonwoven sold by Kimberly Clark) had very poor tear strength (127 g), and so did Wypall[R] (a single ply HiLoft[R] like tissue sold by Scott Paper Co.) (157 g). These are shown here to demonstrate the superior and unexpected results of the present invention over state-of-the-art wipers.

CLAIMS

1.      An industrial wiper material comprising a laminate of:

A.      Absorbent tissue outer plies wherein at least one said outer ply tissue alone has:

1.      a basis weight of 30-90 g/m;

2.      an oil absorption capacity greater than 175 g/m;

3.      an oil drop absorbency rate of less than 15 sec.;

4.      a water wicking rate of less than 80 sec.; and

5.      a low load thickness of 0.4 to 0.8 mm;

B       A flexible tear reinforcing center ply; and

C.      A latex binder which binds said outer plies to upper and lower surfaces of said center ply; wherein said wiper material has:

1.      a bending length of less than 4.8 cm;

2.      an oil absorption capacity of greater than 300 $g/m^2$;

3.      an oil drop absorbency rate of less than 15 sec.;

4.      a water wicking rate of less than 40 sec.;

5.      an Elmendorf tear strength of greater than 225 g., said wiper having a tear strength equal to 30% to 70% of the tear strength of said reinforcing centre ply;

6.      a wet abrasion weight loss of less than 6 mg.;

7.      a wiper thickness of from 0.5 mm to 1.4 mm;

8       a tubular crush of less than 850 g.; and

9.      a heat resistancy of greater than 200°C.

2.      A wiper according to Claim 1 wherein said outer ply tissue alone has a wet abrasion weight loss of less than 5 mg; and said center ply alone has:

1.      a tear strength of greater than 325 g;

2.      a basis weight of from 10-30 $g/m^2$; and

3.      a bending length of less than 5 cm;

said latex binder alone has a glass transition temperature (Tg) of less than 10$^{o}$C; said latex binder having a solids add-on of 40-150% by weight of said center ply; said laminate having a dry peel of greater than 100g; and a wet peel of greater than 80 g.

3.    A wiper according to either one of claims 1 and 2 has:

1.    oil absorption capacity greater than 500 g/m$^2$;

2.    oil drop absorbency rate less than 10 sec.

3.    wicking rate less than 20 sec.;

4.    tear strength greater than 300 g.;

5.    wet abrasion weight loss less than 5 mg.;

6.    wiper thickness from 0.7 mm to 1.0 mm;

7.    tubular crush less than 400 g; and

8.    heat resistancy greater than 250$^{o}$C.

4.    A wiper according to any one of claims 1-3 wherein: said outer ply has:

1.    a basis weight of 30-75 g/m$^2$;

2.    an oil drop absorbency rate of less than 8 sec.;

3.    a water wicking rate of less than 30 sec.;

4.    a wet abrasion weight loss of less than 5.2 mg;

5.    a low load thickness of 0.45 to 0.7 mm;

said center ply has:

1.    a tear strength of greater than 472 g;

2.    a basis weight of from 12-25 g/m$^2$;

3.    a bending length of less than 4.5 cm.;

said latex binder has a Tg of less than 0$^{o}$C' said latex solids have an add-on of 50-130%; and wherein said wiper has a dry peel of greater than 150 g; and a wet peel of greater than 100g.

5.    The invention of any of claims 1-4 wherein said outer ply tissue is strengthened for wet abrasion resistance after lamination.

Fig. 1

Fig. 2

Fig. 3